# EUROPÄISCHE PATENTANMELDUNG

(11) **EP 0 814 311 A1**
(43) Veröffentlichungstag der Anmeldung: **29.12.1997**
(21) Anmeldenummer: 97108565.9
(22) Anmeldetag: 28.05.1997
(51) Int. Cl.: F26B 3/347, F26B 25/22

(54) **Verfahren und Vorrichtung zum Trocknen**

(30) Priorität: 20.06.1996 DE 19624610
(71) Anmelder: Colortronic GmbH, D-61381 Friedrichsdorf (DE)
(72) Erfinder: Rohr, Marcel O., 5502 Hunzenschwil (CH)
(74) Vertreter: Schieferdecker, Lutz, Dipl.-Ing.

(57) **Zusammenfassung**

Die Erfindung betrifft ein Verfahren zum Trocknen und/oder Kristallisieren, insbesondere von aus Kunststoff bestehendem Trocknungsgut (2) mit Hilfe von Mikrowellen (16, 17).

Der Kern der Erfindung besteht darin, daß die eingestrahlte Mikrowellenleistung in Abhängigkeit von der Feuchte geregelt wird.

## Beschreibung

Die Erfindung betrifft ein Verfahren und eine Vorrichtung zum Trocknen und/oder Kristallisieren, insbesondere von aus Kunststoff bestehendem Trocknungsgut mit Hilfe von Mikrowellen gemäß den Ansprüchen 1 und 8.

Verfahren und Vorrichtungen der genannten Art sind aus der DE 40 36 112 C2 bzw. aus der DE 43 21 142 A1 bekannt. So beschreibt die zuerst genannte Schrift eine Einrichtung zum kontinuierlichen Trocknen von stückigem, granulatförmigem oder faserig-blättrigem Gut, das in einer Vakuumkammer auf mehreren Bandförderern durch Mikrowellen und zusätzlich konvektiv erwärmt wird. Mittels einer Vakuumpumpe wird in der Trocknungskammer über ein Steuerventil ein konstanter Druck im Bereich von 80 bis 300 hPa aufrecht erhalten. Ferner ist jede Trocknungszone mit einer oder mehreren parallel oder hintereinander geschalteten Mikrowellenquellen, beispielsweise Magnetronen ausgerüstet. Der Eintrag der Mikrowellenenergie erfolgt über jeweils einen Kohlleiter, ein vakuumdichtes Teflonfenster und einen Hornstrahler. Die Abstimmung des Mikrowellensystems ist derart gewählt, daß sie zu einer Verringerung von Reflexionen führt, wobei dies jeweils über einen in den Hohlleiter integrierten 3-Stift-Tuner mit einer vorgeschalteten Anpassungsstrecke erfolgt. Dieses Element kann insbesondere ein 3-Tor-Zirkulator sein, der die reflektierte Leistung mißt und absorbiert. Das Ausgangssignal des Leistungsmeßteils im Zirkulator wird für die optimale Einstellung des 3-Stift-Tuners ausgewertet. Die Hornstrahler sind ferner derart gestaltet, daß eine gleichmäßige Verteilung des von mehreren Magnetronen erzeugten Mikrowellenfeldes über die Breite des Bandes gewährleistet ist, so daß das Produkt gleichmäßig erwärmt und getrocknet wird.

Ferner sind bei der bekannten Einrichtung am Ende einer jeden Trocknungsstrecke Infrarotsensoren vorgesehen, die die Produkt-Oberflächentemperatur messen. Ein nicht näher erläuterter Steuerkreis sorgt für die Regelung der eingestrahlten Mikrowellenleistung in Abhängigkeit von der Produkttemperatur. Das getrocknete Gut wird schließlich über eine mit Inertgas begasbare Doppelkammerschleuse ausgetragen.

Die DE 43 21 142 A1 beschreibt ebenfalls ein Verfahren und eine Vorrichtung zum Trocknen von Granulat und insbesondere zum Trocknen und/oder Kristallisieren von Kunststoffgranulat mit Hilfe von Mikrowellen, wobei ein sehr starker Unterdruck im Inneren des Trocknungsbehälters erzeugt und Wärme gezielt abgezogen werden soll. Insbesondere soll die Behälterwand des Trocknungsbehälters zugleich als Wärmetauscher mit der Umgebungsluft verwendet werden.

Die besagten Verfahren und Vorrichtungen haben noch nicht die in sie gesetzten Erwartungen erfüllt. So besteht noch immer die Gefahr, daß sich das Trocknungsgut partiell überhitzt und sich dann entweder chemisch verändert oder zusammenbackt. Die Temperatursteuerung ist daher nach wie vor schwierig.

Der Erfindung liegt die Aufgabe zugrunde, ein Verfahren und eine zugehörige Vorrichtung anzugeben, mit deren Hilfe sich der Trocknungsvorgang und die Temperatursteuerung zuverlässiger gestalten lassen als dies bisher der Fall war.

Zur Lösung dieser Aufgabe sieht die Erfindung mit den Merkmalen des kennzeichnenden Teiles des Anspruches 1 vor, daß die eingestrahlte Mikrowellenleistung in Abhängigkeit von der Feuchte geregelt wird.

Zur Vermeidung von Überhitzungen im Trocknungsgut wird die eingestrahlte Mikrowellenleistung geregelt. Eine unmittelbare Messung der Temperatur im Inneren des Trocknungsgutes ist nicht möglich. Die vorhandene oder noch vorhandene Feuchte läßt sich aber ermitteln und läßt Rückschlüsse auf die Temperatur zu. Um örtliche Überhitzungen zu vermeiden, erfolgt daher eine Regelung über die Feuchte, wobei unter Feuchte der Wasseranteil zu verstehen ist, der sich aus dem Quotienten von Masse des Wassers in Gramm zur Masse des Gutes einschließlich Wasser in Gramm ergibt. Für eine Prozentangabe ist der ermittelte Faktor mit 100 zu multiplizieren.

In Weiterbildung der Erfindung ist vorgesehen, daß der vom Trocknungsgut nicht absorbierte Anteil der eingestrahlten Mikrowellenleistung gemessen und zur Ermittlung der Feuchte herangezogen und sodann zur Regelung der noch einzustrahlenden Mikrowellenleistung herangezogen wird.

Vorzugsweise wird die eingestrahlte Mikrowellenleistung nach dem Trocknungsvorgang in Abhängigkeit von der Restfeuchte geregelt. Zwingend notwendig ist dies jedoch nicht, denn es ist grundsätzlich möglich, daß die Ermittlung der Feuchte und/oder der Restfeuchte vor und/oder während und/oder nach der Trocknung erfolgt.

Weitere Merkmale der Erfindung gehen aus Unteransprüchen in Verbindung mit der Beschreibung und der Zeichnung hervor.

Die Erfindung wird nachstehend anhand von Ausführungsbeispielen, die in der Zeichnung dargestellt sind, näher beschrieben. Dabei zeigen:
- Fig. 1:: eine Prinzipskizze von wesentlichen Merkmalen der Vorrichtung;
- Fig. 2:: eine Prinzipskizze wie in Fig. 1 von einer abgewandelten Ausführungsform und
- Fig. 3:: eine Prinzipskizze wie in den Fig. 1 und 2 von einem dritten Ausführungsbeispiel.

Eine Vorrichtung 1 zum Trocknen von insbesondere stückigem, granulatförmigem, pulverförmigem bzw. faserig-blättrigem, vorzugsweise aus Kunststoff bestehendem und gegebenenfalls auch zum Kristallisieren bestimmtem, nachfolgend ausschließlich als Trocknungsgut 2 bezeichnetem Gut umfaßt ein mikrowellengeeignetes Trocknungsgehäuse 3 und grundsätzlich bekannte Komponenten 4 und 5 zum Zuführen bzw. zum Abführen des Trocknungsgutes 2 in die bzw. aus der Trocknungszone 6. Bei den Komponenten 4 und 5 kann es sich um grundsätzlich bekannte Schleusen handeln. In der Trocknungszone 6 bewegt sich das Trocknungsgut 7 als kontinuierlicher Produktstrom längs des Pfeiles 7, wobei auch eine geeignete Wiegeeinrichtung 8 zur Bestimmung der Masse des Durchsatzes des Trocknungsgutes vorgesehen ist. Ein Antriebsmotor 9 dient zur Erzeugung des sich kontinuierlich bewegenden Produktstromes 7 von einer Materialaufgabestelle 10 zu einer Materialabgabestelle 11.

In grundsätzlich bekannter Weise wird die sich im Inneren des Trocknungsgehäuses 3 befindliche, Wasserdampf enthaltende Gasatmosphäre durch eine Leitung 13 zu einer Einrichtung 14 zum Entfeuchten des Gases und von dort zweckmäßigerweise wieder über eine Leitung 15 in das Innere des Trocknungsgehäuses 3 eingespeist. In der Einrichtung 14 kann zugleich eine Wärmebehandlung des Gases erfolgen.

Zur Erzeugung von auf das Trocknungsgut 2 gerichteten Mikrowellen 16, 17 ist schließlich noch mindestens eine Mikrowellenquelle 18, z.B. in Gestalt von einem oder mehreren Mikrotronen, vorgesehen. Sie sind derart angeordnet, daß die Mikrowellen unmittelbar auf das Trocknungsgut gerichtet sind. Die Mikrowellen durchdringen das Trocknungsgut und werden nur von seinem wasserförmigen Anteil absorbiert. Zur Messung der jeweiligen Reststrahlung ist mindestens ein Mikrowellensensor 19 vorgesehen. Er ragt in das Innere des Trocknungsgehäuses 3. Die dort herrschende Temperatur wird von mindestens einem Temperatursensor 20 gemessen, bei dem es sich zweckmäßigerweise um einen Infrarotsensor handelt. Die von dem Mikrowellensensor 19 und von dem Temperaturfühler 20 ermittelten Werte werden von einer Steuereinrichtung 21 ausgewertet, die zur Regelung des bzw. der Mikrowellenquellen 18 und zweckmässigerweise auch zur Regelung des Antriebsmotors 9 für den Produktstrom 7 und zur Regelung der Einrichtung 14 dient. Auch die von der Wiegeeinrichtung 8 ermittelten Werte werden in die Steuereinrichtung 21 eingegeben, um eine vollautomatische Regelung bis hin zur Bestimmung der Restfeuchte zu erzielen.

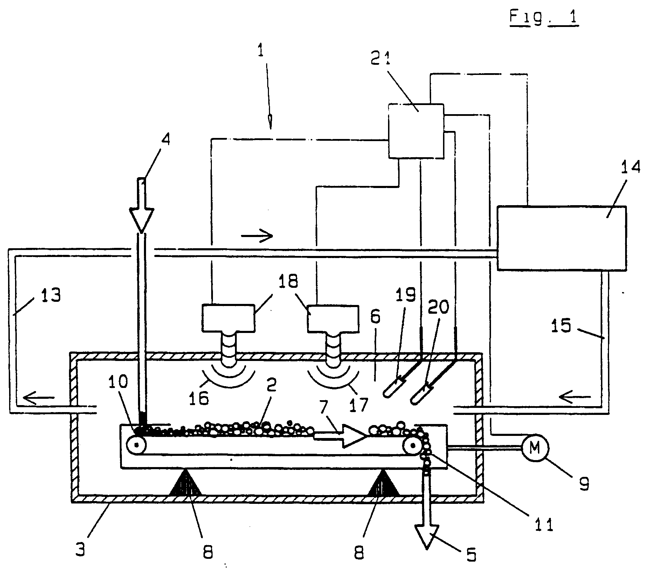

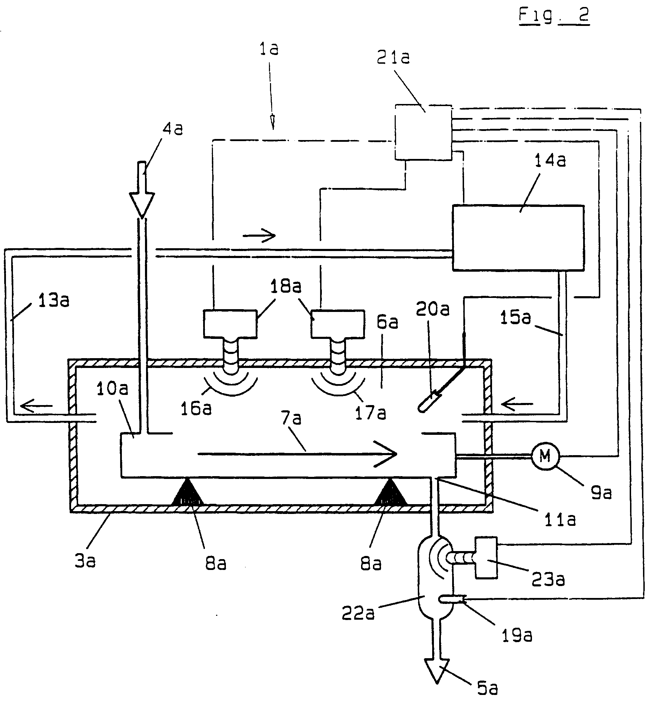

Eine abgewandelte Vorrichtung 1a ist in Fig. 2 dargestellt. Grundsätzlich gleiche Teile weisen daher auch dieselben Bezugszahlen und zusätzlich den Buchstabenindex a auf. Soweit die Teile und ihre Funktion in den Fällen der beiden Ausführungsbeispiele nach Fig. 1 bzw. nach Fig. 2 identisch übereinstimmen, wird auf eine nochmalige Erwähnung nachfolgend verzichtet.

Charakteristisch für die Vorrichtung 1a ist, daß zur Ermittlung der Reststrahlung ein besonderes Meßgehäuse 22a und eine besondere Mikrowellenquelle 23a vorgesehen sind. Der zur Ermittlung der Reststrahlung dienende Mikrowellensensor 19a mißt die Reststrahlung im Meßgehäuse 22a und nicht im Trocknungsgehäuse 3a.

Das Trocknungsgut gelangt in das Meßgehäuse 22a, nachdem es das Trocknungsgehäuse 3a durch die Materialabgabestelle 11a verlassen hat. Die Rückkoppelung der Meßergebnisse des Mikrowellensensors 19a aus dem Meßgehäuse 22a führt auch bei einem kontinuierlichen Betrieb dazu, daß der gewünschte Trocknungsgrad des Trocknungsgutes im Trocknungsgehäuse 3a problemlos erreicht werden kann.

Zweckmäßigerweise ist das Meßgehäuse 22a mit seiner Hauptachse senkrecht sowie unmittelbar unter der trocknungsgehäuseseitigen Materialabgabestelle 11a angeordnet. Das Trocknungsgut bewegt sich aufgrund der Schwerkraft durch das Meßgehäuse 2a bis zu der zum Abführen dienenden Komponente 5a. Die zusätzliche Mikrowellenquelle 23a ist ferner über dem Mikrowellensensor 19a angeordnet.

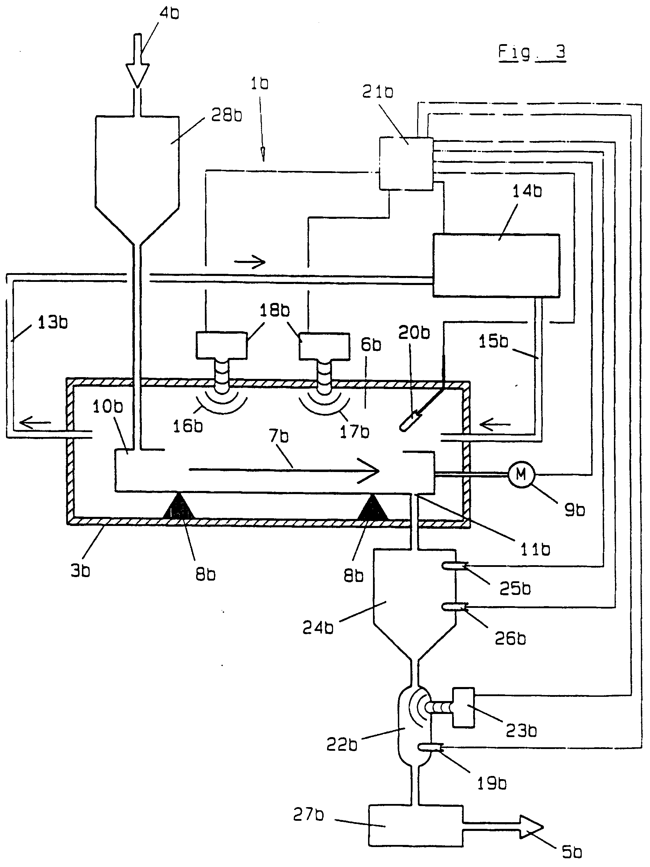

Die Fig. 3 zeigt schließlich noch ein drittes, ebenfalls abgewandeltes Ausführungsbeispiel von einer Vorrichtung 1b. Auch hier weisen wiederum gleiche Teile dieselben Bezugszahlen und zusätzlich den Buchstabenindex b auf. Teile, die hinsichtlich Funktion und Wirkungsweise identisch übereinstimmen, sind auch hier nicht nochmals beschrieben.

Die Vorrichtung 1b weist gegenüber der Vorrichtung 1a zusätzlich einen Pufferbehälter 24b zwischen der Materialabgabestelle 11b und dem Meßgehäuse 22b auf. Zu dem Meßgehäuse 22b gehören wiederum eine Mikrowellenquelle 23b und ein Mikrowellensensor 19b. Zweckmäßigerweise befindet sich der Pufferbehälter 24b in Richtung der Schwerkraft unterhalb der Materialabgabestelle 11b. Der Pufferbehälter 24b weist zwei Niveaufühler 25b und 26b in vertikalem Abstand übereinander auf. Die Niveaufühler 25b und 26b sind ferner über Leitungen mit der Steuereinrichtung 21b verbunden, so daß mit ihrer Hilfe eine Regelung des Antriebsmotors 9b für den Produktstrom 7b möglich ist.

Hinter dem besonderen Meßgehäuse 22b zum Ermitteln einer Reststrahlung ist in Fig. 3 für die Vorrichtung 1b symbolmäßig auch eine Fördereinrichtung 27b in Verbindung mit der Komponente 5b zum Abführen des Trocknungsgutes angegeben. Es versteht sich, daß diese Fördereinrichtung 27b auch bei den Vorrichtungen 1 und 1a vorgesehen sein kann, ebenso wie dies für den in Fig. 3 zusätzlich dargestellten Aufgabebehälter 28b in Verbindung mit der zum Zuführen dienenden Komponente 4b gilt.

Während bei der Vorrichtung 1 die Restfeuchte über die nicht absorbierte Reststrahlung unmittelbar in dem Trocknungsgehäuse 3 ermittelt wird, erfolgt die Ermittlung der Restfeuchte bei den Vorrichtungen 1a und 1b nach dem Trocknungsvorgang in dem zusätzlichen Meßgehäuse 22a bzw. 22b. Es versteht sich schließlich, daß die Ermittlung der Feuchte über die Reststrahlung auch gleichzeitig sowohl durch einen Mikrowellensensor 19 im Trocknungsgehäuse 3 und durch ein zusätzliches Meßgehäuse 22a bzw. 22b mit zugehöriger Mikrowellenquelle 23a bzw. 23b und zugehörigem Mikrowellensensor 19a bzw. 19b durchgeführt werden kann.

Auch ist es möglich, die Feuchte des Trocknungsgutes räumlich und/oder zeitlich vor dem Trocknungsvorgang zu ermitteln. Dazu kann entweder ein besonderes Meßgehäuse mit seinen Komponenten entsprechend dem Meßgehäuse 22a zwischen der zum Zuführen des Trocknungsgutes dienenden Komponenten 4 und der Materialaufgabestelle 10 angeordnet werden, und/oder es werden im Falle einer diskontinuierlichen Trocknung oder zu Beginn einer kontinuierlichen Trocknung die Feuchte des Trocknungsgutes im Trocknungsgehäuse 3 durch eine kurzzeitige Bestrahlung des Trocknungsgutes 2 mit Mikrowellen und die gleichzeitige Messung der Reststrahlung ermittelt. Die beschriebenen Möglichkeiten zeigen, daß die Erfindung nicht auf die konkret dargestellten Ausführungsbeispiele beschränkt ist und daß vielmehr noch mannigfache Abwandlungen denkbar sind, ohne von dem grundsätzlichen Erfindungsgedanken abzuweichen.

## Patentansprüche

1. Verfahren zum Trocknen und/oder Kristallisieren, insbesondere von aus Kunststoff bestehendem Trocknungsgut (2) mit Hilfe von Mikrowellen (16, 17), dadurch gekennzeichnet, daß die eingestrahlte Mikrowellenleistung in Abhängigkeit von der Feuchte des Trocknungsgutes (2) geregelt wird.

2. Verfahren nach Anspruch 1, dadurch gekennzeichnet, daß die eingestrahlte Mikrowellenleistung in Abhängigkeit von der Restfeuchte des Trocknungsgutes (2) geregelt wird.

3. Verfahren nach mindestens einem der vorhergehenden Ansprüche, dadurch gekennzeichnet, daß der vom Trocknungsgut (2) nicht absorbierte Anteil der eingestrahlten Mikrowellenleistung gemessen und zur Ermittlung der Feuchte/Restfeuchte herangezogen und sodann zur Regelung einer noch einzustrahlenden Mikrowellenleistung verwendet wird.

4. Verfahren nach mindestens einem der vorhergehenden Ansprüche, dadurch gekennzeichnet, daß die von der zum Trocknen dienenden Strahlung herrührende Reststrahlung zugleich zum Messen verwendet wird.

5. Verfahren nach mindestens einem der vorhergehenden Ansprüche, dadurch gekennzeichnet, daß die Messung und die Trocknung zeitlich und/oder räumlich getrennt erfolgen.

6. Verfahren nach mindestens einem der vorhergehenden Ansprüche, dadurch gekennzeichnet, daß die Ermittlung der Feuchte und/oder der Restfeuchte vor und/oder während und/oder nach der Trocknung erfolgt.

7. Verfahren nach mindestens einem der vorhergehenden Ansprüche, dadurch gekennzeichnet, daß zugleich die Temperatur des Trocknungsgutes (2) mit Hilfe von mindestens einem Temperatursensor/Infrarotsensor (20) gemessen wird und daß die gemessene Temperatur zur Regelung der zum Trocknen dienenden Mikrowellenleistung herangezogen wird.

8. Vorrichtung zur Durchführung des Verfahrens nach mindestens einem der Ansprüche 1 bis 7 mit einem Trocknungsgehäuse (3) für einen Produktstrom (7) und mit mindestens einer Mikrowellenquelle (16, 17) und mit Komponenten (4, 5) zum Zuführen und zum Abführen des Trocknungsgutes (2),
gekennzeichnet durch mindestens einen Mikrowellensensor (19) zur Ermittlung von Mikrowellen-Reststrahlung und eine Steuereinrichtung (21) zur Auswertung der ermittelten Reststrahlung zum Regeln der Mikrowellenquelle (16, 17) und/oder des Antriebsmotors (9) für den Produktstrom (7).

9. Vorrichtung nach Anspruch 8, dadurch gekennzeichnet, daß der Mikrowellensensor (19, 19a, 19b) vor und/oder in und/oder hinter der Trocknungszone (6) angeordnet ist.

10. Vorrichtung nach mindestens einem der vorhergehenden Vorrichtungsansprüche, dadurch gekennzeichnet, daß eine Wiegeeinrichtung (8) dem Produktstrom (7) zugeordnet ist.
